# EUROPEAN PATENT APPLICATION

(11) **EP 4 726 925 A1**
(43) Date of publication of application: **15.04.2026**
(21) Application number: 24842239.6
(22) Date of filing: 08.07.2024
(51) Int. Cl.: H01Q 13/10

(54) **ELECTRONICALLY CONTROLLED BEAM SCANNING LEAKY-WAVE ANTENNA AND COMMUNICATION DEVICE**

(30) Priority: 20.07.2023 CN 202310897851
(71) Applicant: Huawei Technologies Co., Ltd., Shenzhen, Guangdong 518129 (CN)
(72) Inventor: LI, Zheng, Beijing 100081 (CN); WEI, Bang, Beijing 100081 (CN); QIAO, Zhenyu, Beijing 100081 (CN); FENG, Xin, Shenzhen, Guangdong 518129 (CN); JIANG, Zhongpo, Shenzhen, Guangdong 518129 (CN)
(74) Representative: Maiwald GmbH
(86) International application number: PCT/CN2024/104329
(87) International publication number: WO 2025/016244

(57) **Abstract**

This application provides an electrically controlled beam sweeping leaky-wave antenna and a communication device. The leaky-wave antenna includes: a gap waveguide, including a strip-shaped ridge, where the gap waveguide is configured to transmit electromagnetic waves in a form of traveling waves, and the strip-shaped ridge is arranged extending in the gap waveguide along a transmission direction of the electromagnetic waves; and a plurality of radiating elements, arranged on a side wall of the gap waveguide, where each radiating element includes a radiation slot and an electric control switch, the radiation slot is configured to leak the electromagnetic waves in the gap waveguide to free space to form a beam, and the electric control switch is configured to control a working status of the radiation slot to implement beam sweeping. The leaky-wave antenna provided in this application can improve a beam squint characteristic of an antenna and improve communication quality of the antenna.

## Description

This application claims priority to Chinese Patent Application No. 202310897851.X, filed with the China National Intellectual Property Administration on July 20, 2023 and entitled "ELECTRICALLY CONTROLLED BEAM SWEEPING LEAKY-WAVE ANTENNA AND COMMUNICATION DEVICE", which is incorporated herein by reference in its entirety.

### TECHNICAL FIELD

This application relates to the field of antenna technologies, and in particular, to an electrically controlled beam sweeping leaky-wave antenna and a communication device.

### BACKGROUND

An electrically controlled beam sweeping leaky-wave antenna can not only implement a frequency sweeping beam in a wide frequency band, but also implement fixed-frequency beam sweeping in a narrow band, and has wide application scenarios. A gap waveguide can implement low-loss transmission of an electromagnetic wave in a high frequency band, and applying the gap waveguide to the electrically controlled leaky-wave antenna can fully take advantage of a high gain and wide sweeping of the antenna.

When the electrically controlled leaky-wave antenna is excited by a wideband signal, a beam angle of the antenna is offset with a change of a frequency. As a result, beams of different frequencies have different gains at a target angle, reducing a gain bandwidth of the antenna and decreasing stability of a communication link. This phenomenon of beam sweeping with the frequency may be referred to as a "beam squint". In millimeter-wave communication, a leaky-wave antenna with a low beam squint characteristic is required to ensure that a beam angle offset is as small as possible when a sweeping frequency changes. In this case, a good gain and a good gain bandwidth can be obtained, and good communication quality of the antenna can be ensured.

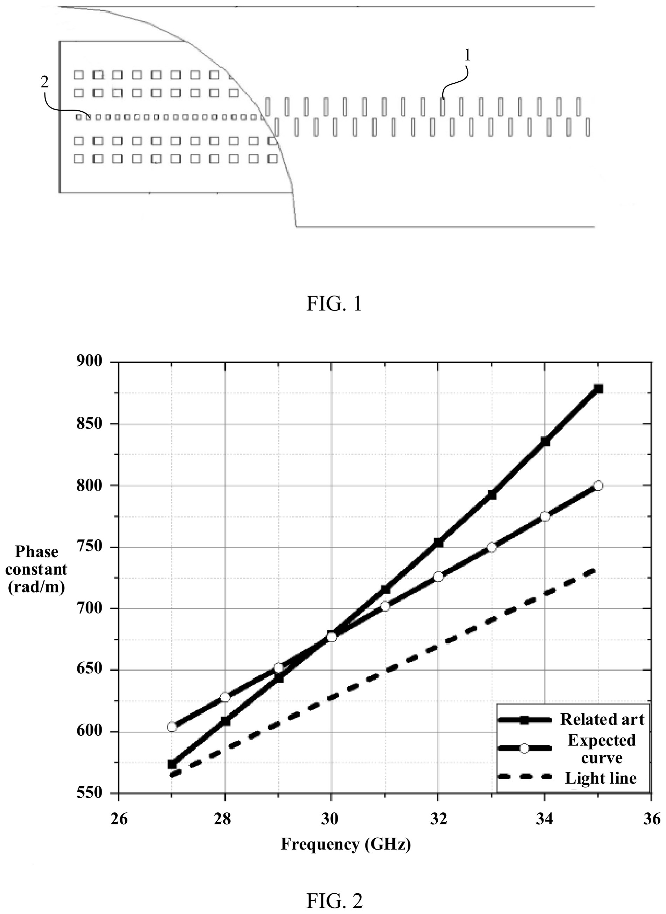

The related art shown in FIG. 1 provides an electrically controlled beam sweeping leaky-wave antenna based on a gap waveguide. A tooth-shaped ridge 2 is arranged on a central axis of the gap waveguide to change a phase constant, so that a transmission mode of the gap waveguide is converted from a fast wave to a slow wave, thereby suppressing fast wave radiation. However, the foregoing antenna structure has strong dispersion, leading to a severe beam squint problem of the antenna. Based on this, providing a low-dispersion electrically controlled beam sweeping leaky-wave antenna to improve a beam squint characteristic is a problem that needs to be resolved.

### SUMMARY

Embodiments of this application provide a low-dispersion electrically controlled beam sweeping leaky-wave antenna and a communication device, to improve a beam squint characteristic of an antenna and improve communication quality of the antenna.

According to a first aspect, an electrically controlled beam sweeping leaky-wave antenna is provided, including: a gap waveguide, including a strip-shaped ridge, where the gap waveguide is configured to transmit electromagnetic waves in a form of traveling waves, and the strip-shaped ridge is arranged extending in the gap waveguide along a transmission direction of the electromagnetic waves; and a plurality of radiating elements, arranged on a side wall of the gap waveguide, where each radiating element includes a radiation slot and an electric control switch, the radiation slot is configured to leak the electromagnetic waves in the gap waveguide to free space to form a beam, and the electric control switch is configured to control a working status of the radiation slot to implement beam sweeping.

According to the electrically controlled beam sweeping leaky-wave antenna provided in this embodiment of this application, the gap waveguide is used as a waveguide structure, so that the antenna still has a low insertion loss in a millimeter wave. The strip-shaped ridge is introduced into the gap waveguide, and the strip-shaped ridge is arranged extending along the transmission direction of the electromagnetic waves, so that a main transmission mode of the gap waveguide changes from a TE10 mode to a hybrid mode of TE10 and TEM. In this way, a phase constant of the antenna is increased, and the main mode works in a slow wave. Further, adding the TEM mode reduces dispersion of the transmitted electromagnetic waves. By controlling a height and a width of the strip-shaped ridge and a width of the gap waveguide, the phase constant of the gap waveguide and a proportion of the TEM mode in the hybrid mode can be properly changed, and both slow-wave and low-dispersion transmission performance can be met. In this application, a low-dispersion waveguide structure is combined with an electrically controlled radiation structure, to implement low-dispersion electrically controlled beam sweeping performance, thereby effectively improving a beam squint characteristic of the antenna and improving communication quality of the antenna.

The electrically controlled beam sweeping leaky-wave antenna provided in this application includes the plurality of radiating elements. The plurality of radiating elements may be arranged on one side wall of the gap waveguide according to a specific rule. Each radiating element includes the radiation slot and the electric control switch that cooperate with each other. The radiation slot can leak the electromagnetic waves in the gap waveguide to the free space to form the beam, and the electric control switch can control the working status of the radiation slot to implement the beam sweeping of the leaky-wave antenna. The foregoing arrangement enables a radiation beam of the leaky-wave antenna provided in this application to have wide-angle, high-gain, and electrically controlled two-dimensional sweeping characteristics. The radiating elements are densely arranged, and the beam has good continuity. The electrically controlled beam sweeping leaky-wave antenna provided in this application also has advantages of a low transmission loss, a low profile, easy processing, and easy integration, so that the antenna has advantages such as a high gain, high efficiency, a low profile, and a light weight, and is applicable to a future millimeter-wave wireless communication system and the like.

In a possible implementation, the gap waveguide further includes a metal bottom plate and a cover plate that are arranged opposite to each other and at an interval, the strip-shaped ridge is arranged protruding from a surface of the metal bottom plate facing the cover plate, a gap exists between the strip-shaped ridge and the cover plate, and the plurality of the radiating elements are arranged on the cover plate.

In a possible implementation, the gap waveguide further includes a metal pin array, where the metal pin array includes a plurality of pins, and the plurality of pins are periodically arranged on two sides of the strip-shaped ridge.

In a possible implementation, the gap waveguide further includes metal baffle plates arranged on two sides of the strip-shaped ridge.

In a possible implementation, the metal baffle plate and the cover plate are fastened through a metal screw.

In a possible implementation, the cover plate includes a dielectric substrate and a first metal layer arranged on an outer surface of the dielectric substrate, where the radiation slot is formed on the first metal layer, and the electric control switch is arranged on an inner surface of the dielectric substrate.

In a possible implementation, the electric control switch includes at least one of a PIN diode, a variable capacitance diode, a micro-electro-mechanical system switch, and a photosensitive switch.

In a possible implementation, the radiation slot is a rectangular slot, and an angle formed between a long side of the rectangular slot and the transmission direction of the electromagnetic waves is 0 degrees, 45 degrees, or 90 degrees.

In a possible implementation, the plurality of radiating elements are arranged in a plurality of rows, and the rows of the radiating elements are staggered from each other.

In a possible implementation, the electrically controlled beam sweeping leaky-wave antenna further includes: a feeding structure, connected to the gap waveguide and configured to feed the electromagnetic waves to the gap waveguide.

In a possible implementation, the electrically controlled beam sweeping leaky-wave antenna further includes: a matched load, connected to the gap waveguide and configured to absorb remaining electromagnetic waves.

In a possible implementation, the electrically controlled beam sweeping leaky-wave antenna further includes: a beam control module, configured to output a control signal to the electric control switch to implement the beam sweeping.

According to a second aspect, a communication device is provided, including the electrically controlled beam sweeping leaky-wave antenna provided in any possible implementation of the first aspect.

Optionally, the communication device may be any communication device that uses an antenna structure to transmit energy or electromagnetic waves, for example, a base station, a radar, or a mobile terminal (for example, a mobile phone), but is not limited thereto.

### BRIEF DESCRIPTION OF DRAWINGS

FIG. 1 is a diagram of a structure of an electrically controlled beam sweeping leaky-wave antenna according to the related art;
FIG. 2 is a comparison diagram of phase constant curves;
FIG. 3 is a comparison diagram of antenna beam sweeping angles under different phase constants;
FIG. 4 is a diagram of a structure of an electrically controlled beam sweeping leaky-wave antenna according to Embodiment 1 of this application;
FIG. 5 is a diagram of a partial structure of the leaky-wave antenna according to Embodiment 1 of this application;
FIG. 6 is an exploded view of the structure of the leaky-wave antenna according to Embodiment 1 of this application;
FIG. 7 is a side view of the leaky-wave antenna according to Embodiment 1 of this application;
FIG. 8 is a side view of a cover plate of the leaky-wave antenna according to Embodiment 1 of this application;
FIG. 9 is a top view of the cover plate of the leaky-wave antenna according to Embodiment 1 of this application;
FIG. 10 is a bottom view of the cover plate of the leaky-wave antenna according to Embodiment 1 of this application;
FIG. 11 is a diagram of a structure of an electric control switch of the leaky-wave antenna according to Embodiment 1 of this application;
FIG. 12 is a comparison diagram of phase constant curves of Embodiment 1 and the related art;
FIG. 13 is a comparison diagram of antenna beam sweeping angles of Embodiment 1 and the related art;
FIG. 14(a) and FIG. 14(b) are normalized radiation patterns of Embodiment 1 and the related art;
FIG. 15 is a diagram of a structure of a leaky-wave antenna according to Embodiment 2 of this application;
FIG. 16 is a top view of a cover plate of the leaky-wave antenna according to Embodiment 2 of this application;
FIG. 17 is a bottom view of the cover plate of the leaky-wave antenna according to Embodiment 2 of this application;
FIG. 18 is a comparison diagram of phase constant curves of Embodiment 2 and the related art;
FIG. 19 is a comparison diagram of antenna beam sweeping angles of Embodiment 2 and the related art;
FIG. 20(a) and FIG. 20(b) are normalized radiation patterns of Embodiment 2 and the related art;
FIG. 21 is a diagram of a structure of a leaky-wave antenna according to Embodiment 3 of this application;
FIG. 22 is an exploded view of the structure of the leaky-wave antenna according to Embodiment 3 of this application;
FIG. 23 is a side view of the leaky-wave antenna according to Embodiment 3 of this application;
FIG. 24 is a diagram of a structure of a leaky-wave antenna according to Embodiment 4 of this application;
FIG. 25 is a top view of a cover plate of the leaky-wave antenna according to Embodiment 4 of this application; and
FIG. 26 is a bottom view of the cover plate of the leaky-wave antenna according to Embodiment 4 of this application.

### Reference numerals:

1: Radiation slot; 2: Tooth-shaped ridge;
10: Gap waveguide; 11: Metal bottom plate; 12: Cover plate; 121: First metal layer; 122: Second metal layer; 123: Dielectric substrate; 13: Metal pin array; 14: Strip-shaped ridge; 15: Excitation port; 16: Load interface; 17: Metal baffle plate; 18: Screw hole; 19: Metal screw;
20: Radiating element; 21: Radiation slot; 22: Electric control switch; 221: First patch; 222: Second patch; 223: Third patch; 224: First PIN diode; 225: Second PIN diode; 226: First metal via; 227: Second metal via;
30: Feeding structure;
40: Matched load; and
50: Beam control module.

### DESCRIPTION OF EMBODIMENTS

The following describes implementations of this application in detail. Examples of the implementations are shown in accompanying drawings. Same or similar reference signs are always used to represent same or similar elements or elements having same or similar functions. The implementations described below with reference to the accompanying drawings are examples, and are merely used to explain this application, but cannot be understood as a limitation on this application.

In descriptions of this application, it should be noted that, unless otherwise specified and limited, terms "mounting" and "connection" should be understood in a broad sense. For example, a connection may be a fixed connection, a detachable connection, or an integrated connection; or the connection may be a mechanical connection or an electrical connection, or may allow communication with each other; or the connection may be a direct connection, an indirect connection through an intermediate medium, or internal communication between two elements or a mutual action relationship between two elements. A person of ordinary skill in the art may understand specific meanings of the foregoing terms in this application according to specific cases.

In the descriptions of this application, it should be understood that orientation or position relationships indicated by terms such as "upper", "lower", "side", "front", and "rear" are based on orientation or position relationships of mounting, and are used only for ease and brevity of illustration and description of this application, rather than indicating or implying that a mentioned apparatus or element needs to have a particular orientation or needs to be constructed and operated in a particular orientation. Therefore, such terms should not be construed as a limitation on this application.

It should be further noted that in embodiments of this application, a same reference numeral indicates a same component or a same part. For same parts in embodiments of this application, only one part or component marked with a reference numeral may be used as an example in the figure. It should be understood that the reference numeral is also applicable to another same part or component.

For ease of understanding technical solutions provided in embodiments of this application, the following first describes related concepts in this application.

Leaky-wave antenna (leaky-wave antenna): is a traveling wave antenna, and a main characteristic of the leaky-wave antenna is that electromagnetic waves of a specified width can be emitted along a radiation direction of the antenna. The leaky-wave antenna forms a waveguide-like structure in the radiation direction, so that the leaky-wave antenna can generate wide-band, high-power, and wide-angle electromagnetic wave radiation. Due to a characteristic that the leaky-wave antenna can implement frequency sweeping in space, the leaky-wave antenna is widely used in fields such as radar, communication, remote sensing, and space-based navigation. Due to an excellent radiation characteristic, especially in an electronic countermeasures scenario, the leaky-wave antenna has an evident advantage. In addition, the leaky-wave antenna has advantages of good directivity, a high gain, a simple structure, a small size, and low manufacturing costs, which provides a favorable condition for further development of antenna technologies.

Because the leaky-wave antenna has a frequency sweeping characteristic, and an actual requirement of fixed-frequency sweeping (that is, beam sweeping is implemented at a fixed frequency) is considered, a fixed-frequency sweeping leaky-wave antenna emerges. In the fixed-frequency sweeping leaky-wave antenna, an electric control switch or an electrically adjustable medium is loaded on the leaky-wave antenna, and on-off of the switch or an electromagnetic characteristic of the medium is changed by applying an external voltage, to change a beam direction of the leaky-wave antenna at a fixed frequency, thereby implementing fixed-frequency beam sweeping. The fixed-frequency sweeping leaky-wave antenna is also referred to as an electrically controlled sweeping leaky-wave antenna, and a most typical electrically controlled beam sweeping leaky-wave antenna is based on a PIN diode or a variable capacitance diode. In recent years, a planar leaky-wave antenna has been widely studied. The planar leaky-wave antenna can be directly processed on a printed circuit board (printed circuit board, PCB), has advantages such as a low profile, easy processing, a simple structure, easy feeding, and high directivity, and has a beam sweeping characteristic.

Gap waveguide (gap waveguide, GW): is a type of waveguide structure, and has a characteristic that is similar to a conventional waveguide but can overcome a limitation of the conventional waveguide. Compared with a common uniform waveguide, an important characteristic of the gap waveguide is that one or more slots are provided in the waveguide, metal wall plates are respectively arranged on two sides of the waveguide, and a dielectric material is filled in the slots. This structure helps reduce a working wavelength of the waveguide, and reduce a size and a loss of a component. The gap waveguide is not only applicable to a microwave component of a high frequency band (millimeter wave and terahertz band), but also widely used in a radio transmission system of a low frequency band, for example, a microwave integrated circuit, a wideband communication system, high-speed digital communication, and the like. Because the waveguide can support a wide bandwidth and has a low transmission distortion advantage, the waveguide is widely used in modern communication and a radar system.

The gap waveguide is a new waveguide structure, and is made of two parallel metal conductor plates. The upper metal plate is a perfect electric conductor (perfect electric conductor, PEC), and the lower metal plate is made of an artificial magnetic conductor (artificial magnetic conductor, AMC) formed by a metal ridge or an air slot in the middle and periodic metal pins on two sides. An air gap layer exists between the upper layer and the lower layer, and electromagnetic waves are transmitted along the metal ridge or the air slot. The gap waveguide mainly includes forms such as a ridge gap waveguide (ridge gap waveguide, RGW), a slot gap waveguide, and a substrate integrated gap waveguide, where the ridge gap waveguide can better resolve a high frequency band loss and a processing problem, and is widely studied.

The ridge gap waveguide includes four parts: a metal ridge, metal pins spaced periodically, a top metal plate, and a bottom metal plate. Due to a bandgap characteristic of an electromagnetic band gap (electromagnetic band gap, EBG) structure in a working frequency, the electromagnetic band gap structure can block propagation of the electromagnetic waves in a specific frequency band, so that propagation of the electromagnetic waves in an air gap at an upper layer of the metal ridge is constrained. Therefore, there is no need to worry about a dielectric loss of the ridge gap waveguide. In addition, the structure is relatively small, and is easier to be miniaturized and integrated. The ridge gap waveguide not only has transmission performance similar to that of a rectangular waveguide, but also does not have a disadvantage of the rectangular waveguide, making the ridge gap waveguide a new choice for millimeter-wave antenna design.

Beam squint (beam squint): refers to an offset generated by a change of a beam direction of an antenna with a frequency due to factors such as a bandwidth limitation and a multifrequency operation. A beam usually leads to performance deterioration of the antenna at some frequencies because the beam fails to accurately point to a required direction. To avoid the beam squint, a proper beam width needs be selected during antenna design, and accurate correction and control are performed. Only when the antenna has a low beam squint characteristic (that is, a small angle offset), can the beam angle offset be kept as small as possible when a sweeping frequency changes.

Dispersion: indicates that light or electromagnetic waves of different wavelengths or frequencies are transmitted at different speeds in a medium. As a result, the light or the electromagnetic waves of different wavelengths or frequencies are dispersed in the medium, that is, propagated in different directions, and some dispersion effects, such as a dispersion relation and a dispersion delay, are formed. Common dispersion phenomena include refractive dispersion, dispersion of a dispersion lens, and free-space dispersion. The dispersion is very important in physics and application fields of the physics. For example, the dispersion is widely applied to fields such as optics, communication, material science, and the like. When dispersion of an antenna is weak, the antenna has a good beam squint characteristic, that is, low dispersion can improve the beam squint characteristic.

The emergence of 5th generation (5th generation, 5G) mobile communication greatly promotes industrial development and improves quality of people's life. A high-speed data transmission characteristic of the 5th generation mobile communication is widely applied to fields such as Internet of Things, autonomous driving, and virtual reality (virtual reality, VR)/augmented reality (augmented reality, AR). A millimeter-wave frequency band can meet a wideband requirement of the 5G mobile communication to implement high-speed data transmission, but a high-directivity antenna is required to resist a severe path loss. In addition, the antenna further needs to have a beam sweeping capability to implement large-scale signal coverage.

The leaky-wave antenna is a type of beam sweeping antenna, and has advantages of high directivity, a low profile, simple feeding, and easy integration. A conventional leaky-wave antenna implements multi-target coverage by changing a frequency. However, an electrically controlled beam sweeping leaky-wave antenna that is popular in recent years has broader application scenarios, because the electrically controlled beam sweeping leaky-wave antenna can not only implement a frequency sweeping beam in a wide frequency band, but also implement fixed-frequency beam sweeping in a narrow band. The gap waveguide technology can implement low-loss transmission of electromagnetic waves in the high frequency band, and applying the gap waveguide technology to the electrically controlled leaky-wave antenna can fully take advantage of a high gain and wide sweeping of the antenna.

However, it should be noted that, when the electrically controlled leaky-wave antenna is excited by a wideband signal, a beam angle of the antenna is offset with a change of a frequency. As a result, beams of different frequencies have different gains at a target angle, reducing a gain bandwidth of the antenna and decreasing stability of a communication link. Generally, this phenomenon of beam sweeping with the frequency is referred to as a "beam squint (beam squint)". In millimeter-wave communication, a leaky-wave antenna with a low beam squint characteristic is required to ensure that a beam angle offset is as small as possible when a sweeping frequency changes. In this case, a good gain and a good gain bandwidth can be obtained, and a good communication effect of the antenna can be ensured.

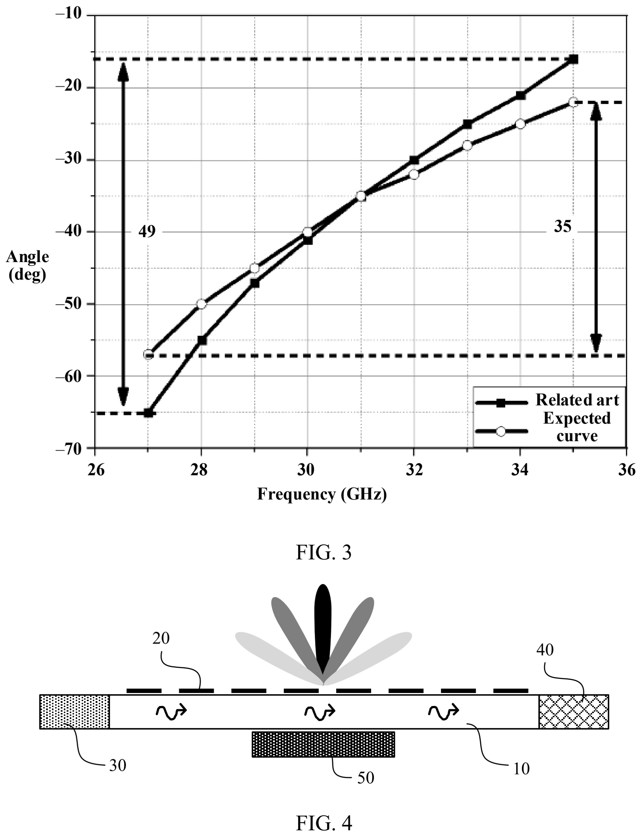

FIG. 1 is a diagram of a structure of an electrically controlled beam sweeping leaky-wave antenna according to the related art, and FIG. 2 is a comparison diagram of phase constant curves. FIG. 3 is a comparison diagram of antenna beam sweeping angles under different phase constants. As shown in FIG. 1, in the related art, an electrically controlled leaky-wave antenna based on a gap waveguide structure is provided. A radiation slot 1 is located above the gap waveguide, and is configured to radiate electromagnetic waves. Each radiation slot 1 is loaded with a PIN diode. By changing on-off of the PIN diode, aperture fields of different cycle lengths may be implemented, thereby implementing electrically controlled beam sweeping. A tooth-shaped ridge 2 is located on a central axis of the gap waveguide. A phase constant may be effectively changed by changing a height of the tooth-shaped ridge, so that a transmission mode of the gap waveguide is converted from a fast wave into a slow wave, thereby suppressing fast wave radiation and implementing -1-order spatial harmonic radiation.

In the related art shown in FIG. 1, the tooth-shaped ridge 2 is used to adjust the phase constant of the gap waveguide, and an obtained phase curve is a curve with black rectangles in FIG. 2. A slope of the phase curve is greatly different from a slope of a phase curve of a light line (light line), and with an increase in a frequency, a difference between the phase constant of the related art and the phase constant of the light line gradually increases. A curve with white circles in FIG. 2 is an expected phase constant curve, a slope of the curve is closer to the slope of the light line, and a phase constant value at a high frequency is relatively small. Herein, the phase curve of the light line can reflect an optical transmission characteristic. When the electromagnetic waves are transmitted in a TEM mode in a vacuum environment, a phase velocity of the electromagnetic waves is equal to a light speed. Therefore, the light line (light line) is often used as a comparison item for comparison with a phase constant of another dispersion structure.

It can be learned from FIG. 3 that a beam angle of an antenna provided in the related art changes with a frequency in a larger range, and dispersion is strong, leading to a severe beam squint problem of the antenna provided in the related art. Based on this, providing a low-dispersion electrically controlled beam sweeping leaky-wave antenna to improve a beam squint characteristic is a problem that needs to be resolved.

Embodiments of this application provide a low-dispersion electrically controlled beam sweeping leaky-wave antenna and a communication device. A strip-shaped ridge is introduced into a gap waveguide, so that a main transmission mode of the gap waveguide changes from a TE10 mode to a hybrid mode of TE10 and TEM. Adding the TEM mode reduces dispersion of transmitted electromagnetic waves, thereby effectively improving the beam squint characteristic of the antenna and improving communication quality of the antenna. In this application, a low-dispersion waveguide structure is combined with an electrically controlled radiation structure, to implement low-dispersion electrically controlled beam sweeping performance. The leaky-wave antenna provided in embodiments of this application is applicable to a 5G millimeter wave (millimeter wave, MMW) high-speed communication system, a base station communication system, a wideband large-capacity communication system, an in-vehicle (a ship or an aircraft) radar, and a "communication in motion" satellite communication system, but is not limited thereto.

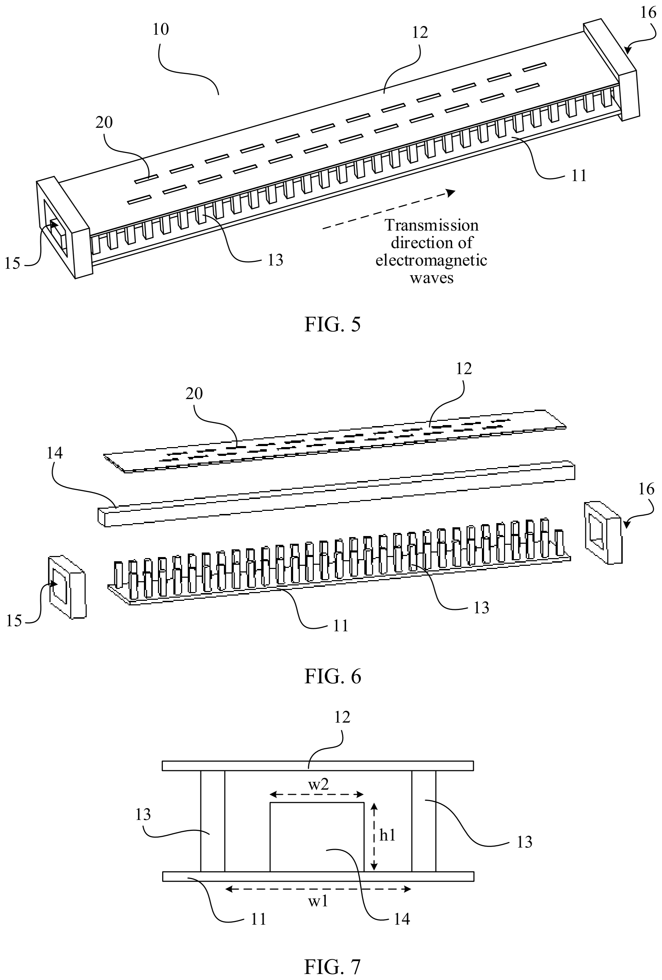

An embodiment of this application first provides an electrically controlled beam sweeping leaky-wave antenna. FIG. 4 is a diagram of a structure of an electrically controlled beam sweeping leaky-wave antenna according to Embodiment 1 of this application, FIG. 5 is a diagram of a partial structure of the leaky-wave antenna according to Embodiment 1 of this application, FIG. 6 is an exploded view of the structure of the leaky-wave antenna according to Embodiment 1 of this application, and FIG. 7 is a side view of the leaky-wave antenna according to Embodiment 1 of this application. As shown in FIG. 4 to FIG. 7, the electrically controlled beam sweeping leaky-wave antenna provided in this embodiment of this application includes a gap waveguide 10 and a plurality of radiating elements 20.

The gap waveguide 10 includes a strip-shaped ridge 14, and the gap waveguide 10 is configured to transmit electromagnetic waves in a form of traveling waves. The strip-shaped ridge 14 is arranged extending in the gap waveguide 10 along a transmission direction of the electromagnetic waves, or the electromagnetic waves are propagated along an extension direction of the strip-shaped ridge 14. The strip-shaped ridge 14 is a long strip-shaped metal structure. For example, a material forming the strip-shaped ridge 14 includes at least one of copper, aluminum, silver, stainless steel, and the like. The strip-shaped ridge 14 can increase a phase constant of the gap waveguide, convert a fast wave transmission mode into a slow wave transmission mode, and has a low dispersion characteristic. In FIG. 6 and FIG. 7, a cross section of the strip-shaped ridge 14 may be in a shape of a rectangle, or may be in other shapes such as a trapezoid, a rhombus, a parallelogram, a circle, or an ellipse. This is not limited in this application. The strip-shaped ridge 14 may be located at a middle position inside the gap waveguide 10 or may pass through the entire gap waveguide 10, and is connected to a metal bottom plate 11 below. For example, the strip-shaped ridge 14 may be arranged along the transmission direction of the electromagnetic waves and located on a central line or a central axis of the metal bottom plate 11.

The plurality of radiating elements 20 are arranged on a side wall of the gap waveguide 10. Each radiating element 20 includes a radiation slot 21 and an electric control switch 22. The radiation slot 21 is configured to leak the electromagnetic waves inside the gap waveguide 10 to free space to form a beam. The electric control switch 22 is configured to control a working status of the radiation slot 21 to implement beam sweeping of the leaky-wave antenna.

Specifically, each radiating element 20 includes the radiation slot 21 and the electric control switch 22 that cooperate with each other. The radiation slot 21 can radiate (leak) the electromagnetic waves to an external environment. The electric control switch 22 is configured to control the working status of the radiation slot 21. For example, the electric control switch may control the radiation slot 21 to be opened to enter a working state (that is, radiate the electromagnetic waves to the outside), or may control the radiation slot 21 to be closed to enter a non-working state (that is, stop radiating the electromagnetic waves). Controlling the radiation slot 21 to enter the working state is controlling the corresponding radiating element 20 to enter the working state, and controlling the radiation slot 21 to enter the non-working state is controlling the corresponding radiating element 20 to enter the non-working state. Working statuses of the plurality of radiating elements 20 are controlled, for example, some radiating elements 20 may be controlled to work and the remaining radiating elements may be controlled not to work. By controlling different radiating elements 20 to enter the working state, that is, by using different permutations and combinations, different beam directions of the leaky-wave antenna can be implemented, to implement different beam radiation angles, thereby implementing a beam sweeping characteristic of the leaky-wave antenna.

According to the electrically controlled beam sweeping leaky-wave antenna provided in this embodiment of this application, the gap waveguide 10 is used as a waveguide structure, so that the antenna still has a low insertion loss in a millimeter wave. The strip-shaped ridge 14 is introduced into the gap waveguide 10, and the strip-shaped ridge 14 is arranged extending along the transmission direction of the electromagnetic waves, so that a main transmission mode of the gap waveguide 10 changes from a TE10 mode to a hybrid mode of TE10 and TEM. In this way, a phase constant of the antenna is increased, and the main mode works in a slow wave. Further, adding the TEM mode reduces dispersion of the transmitted electromagnetic waves. By controlling a height and a width of the strip-shaped ridge 14 and a width of the gap waveguide 10, the phase constant of the gap waveguide 10 and a proportion of the TEM mode in the hybrid mode can be properly changed, and both slow-wave and low-dispersion transmission performance can be met. In this application, a low-dispersion waveguide structure is combined with an electrically controlled radiation structure, to implement low-dispersion electrically controlled beam sweeping performance, thereby effectively improving a beam squint characteristic of the antenna and improving communication quality of the antenna.

The electrically controlled beam sweeping leaky-wave antenna provided in this application includes the plurality of radiating elements 20. The plurality of radiating elements 20 may be arranged on one side wall of the gap waveguide 10 according to a specific rule. Each radiating element 20 includes the radiation slot 21 and the electric control switch 22 that cooperate with each other. The radiation slot 21 can leak the electromagnetic waves in the gap waveguide 10 to the free space to form the beam, and the electric control switch 22 can control the working status of the radiation slot 21 to implement the beam sweeping of the leaky-wave antenna. The foregoing arrangement enables a radiation beam of the leaky-wave antenna provided in this application to have wide-angle, high-gain, and electrically controlled two-dimensional sweeping characteristics. The radiating elements are densely arranged, and the beam has good continuity. The electrically controlled beam sweeping leaky-wave antenna provided in this application also has advantages of a low transmission loss, a low profile, easy processing, and easy integration, so that the antenna has advantages such as a high gain, high efficiency, a low profile, and a light weight, and is applicable to a future millimeter-wave wireless communication system and the like.

As shown in FIG. 4 to FIG. 6, the electrically controlled beam sweeping leaky-wave antenna provided in this embodiment of this application further includes a feeding structure 30. The feeding structure 30 is connected to the gap waveguide 10, and is configured to feed the electromagnetic waves into the gap waveguide 10 through an excitation port 15 of the gap waveguide 10. The feeding structure 30 is configured to feed electromagnetic energy into the gap waveguide 10 through the excitation port 15. Typical types that may be selected for the feeding structure 30 include a plurality of feeding structure types such as parallel feeding, series feeding, reflective surface feeding, lens feeding, and multi-path independent signal feeding. In some cases, the feeding structure 30 may simultaneously feed the electromagnetic waves into a plurality of gap waveguides 10 that are arranged in parallel.

As shown in FIG. 4 to FIG. 6, the electrically controlled beam sweeping leaky-wave antenna provided in this embodiment of this application further includes a matched load 40. The matched load 40 is connected to the gap waveguide 10, and is configured to absorb remaining electromagnetic waves through a load interface 16 of the gap waveguide 10, so that reflection of the electromagnetic wave can be reduced, helping improve communication quality of the antenna. The gap waveguide 10 may be in a long strip-shaped structure as a whole, and the excitation port 15 and the load interface 16 may be located at two ends of the long strip-shaped structure. In other words, the feeding structure 30 and the matched load 40 are distributed at two ends of the long strip-shaped gap waveguide 10. In some cases, when remaining electromagnetic energy at the end of the gap waveguide 10 (that is, the end having the load interface 16) is very small or small, the matched load 40 at the end may be removed.

As shown in FIG. 4 to FIG. 6, the electrically controlled beam sweeping leaky-wave antenna provided in this embodiment of this application further includes a beam control module 50. The beam control module 50 is configured to output a control signal to the electric control switch 22 to implement the beam sweeping.

Specifically, the beam control module 50 is communicatively connected to each electric control switch 22. The beam control module 50 can output the control signal to the electric control switch 22. The electric control switch 22 further controls the working status of each radiating element 20 based on the control signal, for example, control some radiating elements 20 to enter the working state, and control the remaining radiating elements 20 to enter the non-working state (that is, not work), so as to control the beam direction in an antenna radiation pattern and implement the electrically controlled beam sweeping characteristic of the antenna. In this application, the beam control module is used to provide a beam control signal for the antenna, and the electric control switch 22 controls the working status of each radiating element 20, so that advantages of quick response and high stability are brought, and the beam control module 50 is easily integrated with an antenna system.

Optionally, the beam control module 50 may be any type of controller or processor, for example, a field programmable gate array (field programmable gate array, FPGA) controller or a programmable logic controller (programmable logic controller, PLC).

The electrically controlled beam sweeping leaky-wave antenna provided in this embodiment of this application more relates to structural improvement of the gap waveguide 10. Structure details of the gap waveguide 10 are further limited below with reference to the accompanying drawings.

In this embodiment of this application, the gap waveguide 10 can transmit electromagnetic waves at a high frequency and with a low loss, and may include a plurality of rows of bandgap pins, a metal bottom plate, a dielectric plate with a metal layer. The plurality of rows of bandgap pins are distributed on two sides of a channel of the gap waveguide 10, and may bind the electromagnetic waves in the middle. The bandgap pins in each row are arranged at an equal interval. The bandgap pin may be a rectangular metal block structure, and only has a bandgap characteristic when being connected to the metal bottom plate and the dielectric plate with the metal layer. The metal bottom plate and the dielectric plate with the metal layer are located at a lower layer and an upper layer of the bandgap pins, and form a waveguide structure with the bandgap pins.

Specifically, the gap waveguide 10 includes a metal bottom plate 11 and a cover plate 12 that are arranged opposite to each other and at an interval. The metal bottom plate 11 and the cover plate 12 may be plates, and are arranged in parallel. The strip-shaped ridge 14 is arranged protruding from a surface of the metal bottom plate 11 facing the cover plate 12, and a gap exists between the strip-shaped ridge 14 and the cover plate 12. That is, the strip-shaped ridge is not in contact with the cover plate. The plurality of radiating elements 20 are arranged on the cover plate 12 according to a specific rule, so that the plurality of radiating elements 20 can be coupled to the gap waveguide 10, to obtain electromagnetic energy, or to leak the electromagnetic waves into the free space (an external environment).

In FIG. 7, structural parameters that affect dispersion are marked. The dispersion of the gap waveguide 10 can be effectively reduced by increasing a width w1 of the gap waveguide, increasing a width w2 of the ridge, and increasing a height h1 of the ridge.

Further, in this embodiment of this application, the gap waveguide 10 further includes a metal pin array 13, the metal pin array 13 includes a plurality of pins, and the plurality of pins are periodically arranged on two sides of the strip-shaped ridge 14.

The metal pin array 13 forms an EBG structure, has a bandgap characteristic, and can prevent the electromagnetic waves from being transmitted along a non-ridge direction, thereby avoiding leakage of the electromagnetic waves. A top end of the pin may abut against the cover plate 12, and a height of the pin is greater than the height of the strip-shaped ridge 14, which not only ensures that an air gap is formed between the strip-shaped ridge 14 and the cover plate 12, but also better binds the electromagnetic waves inside the waveguide.

As shown in FIG. 5 to FIG. 7, each pin of the metal pin array 13 is in a column-shaped structure, and extends along a thickness direction of the gap waveguide 10. A cross section of the column-shaped structure parallel to a plane on which the metal bottom plate 11 is located may be any one of a rectangle, a circle, a square, an ellipse, or the like. It should be noted that, in this embodiment of this application, there is no limitation on sizes or parameters such as a cross-sectional shape, a height, a width, and a spacing of the pin.

In this embodiment of this application, the radiating element 20 may be arranged on the cover plate 12 by using a plurality of processes such as a PCB, low temperature co-fired ceramic (low temperature co-fired ceramic, LTCC), or a tape-out process. As shown in FIG. 5 and FIG. 6, this embodiment of this application provides a radiating element array in which the radiating elements are arranged in a staggered manner. In another embodiment, the radiating elements 20 may alternatively be arranged in a non-staggered manner. One or more rows of radiating elements 20 may be arranged on the cover plate 12, and the rows of the radiating elements 20 may be arranged in a staggered manner.

For example, the plurality of radiating elements 20 in this embodiment of this application are arranged into two rows shown in FIG. 5 and FIG. 6, and the rows of the radiating elements 20 are arranged in a staggered manner.

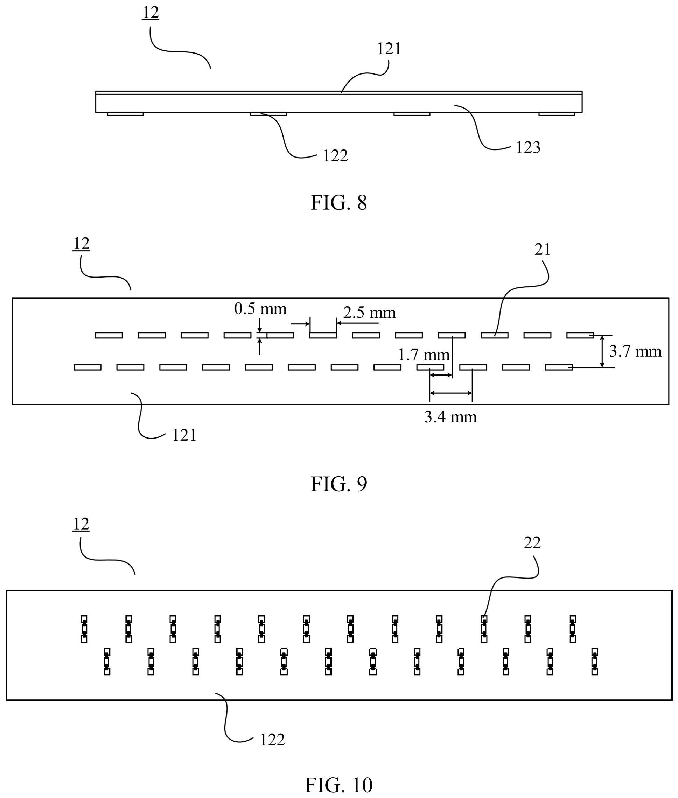

FIG. 8 is a side view of the cover plate 12 of the leaky-wave antenna according to Embodiment 1 of this application. FIG. 9 is a top view of the cover plate 12 of the leaky-wave antenna according to Embodiment 1 of this application. FIG. 10 is a bottom view of the cover plate 12 of the leaky-wave antenna according to Embodiment 1 of this application. As shown in FIG. 8 to FIG. 10, in this embodiment of this application, the cover plate 12 includes a dielectric substrate 123 and a first metal layer 121 arranged on an outer surface of the dielectric substrate 123, the radiation slot 21 is formed on the first metal layer 121, and the electric control switch 22 is arranged on an inner surface of the dielectric substrate 123.

Optionally, the first metal layer 121 and the dielectric substrate 123 may be closely combined into an integrated structure by using a process, for example, mechanical processing, electroplating, thermal pressing, or microelectronics.

Optionally, the cover plate 12 may be a PCB, the dielectric substrate 123 may be an insulating dielectric plate (layer) of the PCB, and the first metal layer 121 may be a copper clad layer of the PCB. In this case, the radiation slots 21 may be provided on the first metal layer 121 by using an etching process or the like, and the plurality of the radiation slots 21 may be periodically provided on the first metal layer 121 to form a slot array.

Optionally, the radiation slots 21 may be slots in any shape, for example, rectangular slots, circular slots, elliptical slots, or triangular slots. The radiation slots 21 directly leak the electromagnetic waves inside the gap waveguide 10 to the free space.

As shown in FIG. 5, FIG. 6, and FIG. 9, in this embodiment of this application, the radiation slot 21 may be a rectangular slot (a straight strip-shaped slot), and an angle formed between a long side of the rectangular slot and the transmission direction of the electromagnetic waves (that is, the extension direction of the strip-shaped ridge 14) is 0 degrees. In this case, the radiation slot 21 may also be referred to as a longitudinal slot.

Optionally, the electric control switch 22 may include a tunable electronic element and/or a tunable material, and the electrically controlled beam sweeping is implemented through the foregoing element or material, which has advantages such as a simple structure, low costs, a fast beam response speed, and a large beam sweeping range.

For example, the tunable electronic element may include at least one of a PIN diode, a variable capacitance diode, a micro-electro-mechanical system (Micro-Electro-Mechanical System, MEMS) switch, and a photosensitive switch.

For example, the tunable material may include at least one of a ferroelectric material of barium strontium titanate, a photoelectric material of graphene, a temperature-variable material of vanadium dioxide, water, a liquid crystal, and the like.

Optionally, the electric control switch 22 may include the tunable electronic element (for example, an active electronic element), a metal patch, and a metal via. The metal patch is arranged on the inner surface of the dielectric substrate 123, the tunable electronic element is fixed on the metal patch, and the metal via penetrates the dielectric substrate 123 and electrically connects the first metal layer 121 and the metal patch.

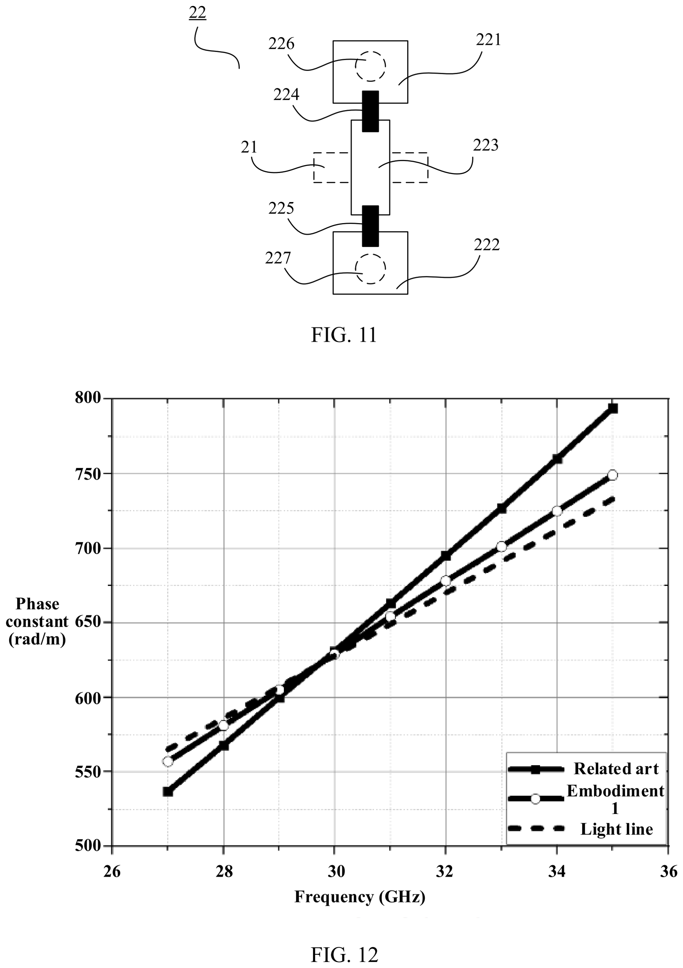

FIG. 11 is a diagram of a structure of the electric control switch 22 of the leaky-wave antenna according to Embodiment 1 of this application. As shown in FIG. 8, FIG. 10, and FIG. 11, in this embodiment of this application, the electric control switch 22 includes a first patch 221, a third patch 223, and a second patch 222 that are sequentially arranged at intervals. The three patches are metal patches and are sequentially connected into a straight line. The straight line intersects with a projection of the long strip-shaped radiation slot 21 (for example, perpendicular to each other), and the third patch 223 in the middle may be located right below the radiation slot 21. The three patches are arranged in parallel on the inner surface of the dielectric substrate 123, to form a second metal layer 122. The second metal layer 122 may also be considered as a part of the cover plate 120.

Optionally, in this embodiment of this application, any functional component, for example, a capacitor, an inductor, a resistor, a chip, or an integrated circuit, may be arranged on the metal layer (for example, the first metal layer 121 and/or the second metal layer 122). This is not limited in this application. In some cases, the foregoing functional component may also be considered as a part of the metal layer.

Further, the electric control switch 22 further includes a first PIN diode 224, a second PIN diode 225, a first metal via 226, and a second metal via 227. The first metal via 226 penetrates the dielectric substrate 123 to electrically connect the first patch 221 and the first metal layer 121, and the second metal via 227 penetrates the dielectric substrate 123 to electrically connect the second patch 222 and the first metal layer 121. One end of the first PIN diode 224 is connected to the first patch 221, and the other end is connected to the third patch 223. One end of the second PIN diode 225 is connected to the second patch 222, and the other end is connected to the third patch 223. Any PIN diode may be connected to the patch in a soldering manner. Therefore, the metal patch in this embodiment of this application may also be understood as a solder pad.

For a specific radiating element 20, the beam control module 50 may control the first PIN diode 224 and the second PIN diode 225 of the radiating element 20 to be turned on. In this case, the radiation slot 21 of the radiating element 20 is short-circuited, and the radiating element 20 does not work and does not radiate the electromagnetic waves to the outside, which may be represented by a digit "0". Alternatively, the beam control module 50 may control the first PIN diode 224 and the second PIN diode 225 of the radiating element 20 to be turned off. In this case, the radiation slot 21 of the radiating element 20 is not short-circuited, and the radiating element 20 works and radiates the electromagnetic waves to the outside, which may be represented by a digit "1".

In this application, "on" and "off' of the PIN diodes are controlled, to control the radiation slot 21 to be short-circuited and not to be short-circuited, so that the radiating element 20 has two digital coding states: "0" and "1". A digital coding scheme of the antenna is formed by controlling the "0" state and the "1" state of each radiating element 20 in the array. By switching between different digital coding schemes, the beam control module 50 can control the beam direction in the antenna radiation pattern, and implement a required radiation pattern at a same specific frequency, to implement the beam sweeping.

**Table 1: Antenna digital coding schemes for implementing an angle of -40° at a frequency of 30 GHz in the related art and in Embodiment 1**

| Angle (30 GHz) | Structure | Digital coding scheme |
|---|---|---|
| -40° | Related art (FIG. 1) | 11101110110011001100110011001100110011001100110011001100 |
| | Embodiment 1 (FIG. 5) | 11101110110011001100110011001100110011001100110011001100 |

The first row in Table 1 shows the antenna digital coding scheme for implementing the angle of -40° at the frequency of 30 GHz by using the antenna structure (in which the radiation slot 21 is a longitudinal slot) provided in the related art shown in FIG. 1. The second row in Table 1 shows the antenna digital coding scheme for implementing the angle of -40° at the frequency of 30 GHz by using the antenna structure provided in Embodiment 1 of this application. In Table 1, each bit corresponds to one radiating element 20, a digit "0" indicates that the corresponding radiating element 20 does not work, and a digit "1" indicates that the corresponding radiating element 20 works. At an angle other than -40°, the antenna may have a digital coding scheme different from the digital coding scheme shown in Table 1.

As shown in FIG. 8 to FIG. 11, the dispersion of the gap waveguide 10 can be effectively reduced by increasing the width w1 of the gap waveguide, increasing the width w2 of the ridge, and increasing the height h1 of the ridge. For example, in a specific example, w1=8 mm, w2=3 mm, and h1=3 mm.

Further, the radiating element 20 can be implemented by etching slots on a printed circuit board and loading PIN diodes (the PIN diodes are located inside the structure). The printed circuit board is formed by a single-layer core board shown in FIG. 8, where a slot array is etched on an upper copper foil, and a solder pad (that is, a metal patch) is etched on a lower copper foil. A basic unit of the etched slot array is a longitudinal slot, where a length of the slot is 2.5 mm (which is a size in the transmission direction of the electromagnetic waves (an x direction)), and a width is 0.5 mm (which is a size in a y direction perpendicular to the transmission direction of the electromagnetic waves). There are 24 units in the array, which are arranged in two rows. A spacing between units in each row of the slots is 3.4 mm, and a line spacing between the two rows is 3.7 mm. There is a 1.7 mm interlace between the two rows of slots in the x direction. FIG. 10 is a structure of the electric control switch 22, where 24 sets of electric control switches 22 are in one-to-one correspondence with 24 radiation slots 21. The electric control switch 22 includes metal patches and PIN diodes. For specific structure details, refer to related descriptions in FIG. 11. Radiation power of the longitudinal slot may be controlled by electrically controlling on and off of the PIN diodes.

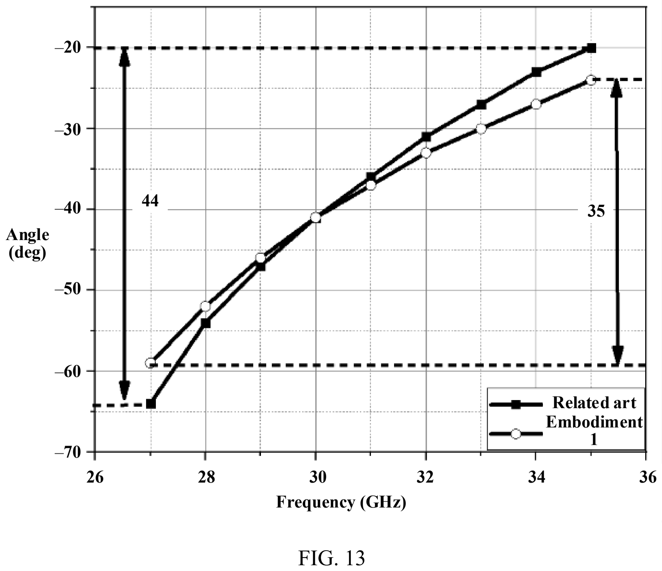

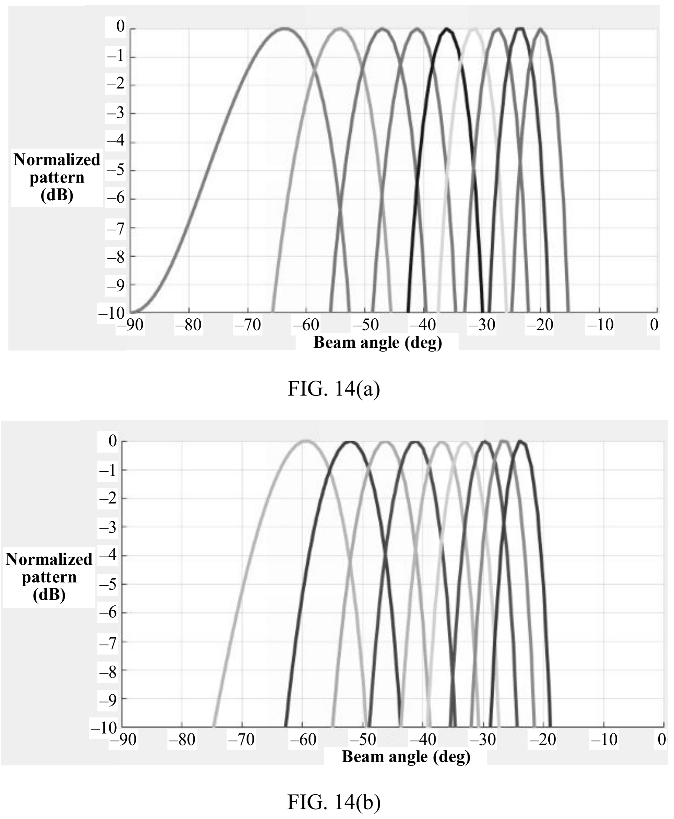

FIG. 12 is a comparison diagram of phase constant curves of Embodiment 1 and the related art. FIG. 13 is a comparison diagram of antenna beam sweeping angles of Embodiment 1 and the related art. FIG. 14(a) and FIG. 14(b) are normalized radiation patterns of Embodiment 1 and the related art, where FIG. 14(a) is a normalized radiation pattern of the related art, and FIG. 14(b) is a normalized radiation pattern of Embodiment 1.

In FIG. 12, a phase constant of the antenna structure provided in the related art and a phase constant of the antenna structure provided in Embodiment 1 of this application when the radiation slot 21 is a longitudinal slot at 27 GHz to 35 GHz are compared. It can be learned that a slope of the phase constant curve of Embodiment 1 is smaller, and a value and the slope are closer to those of a light line (light line), so that the dispersion is smaller. In FIG. 13, FIG. 14(a), and FIG. 14(b), frequency sweeping characteristics of antennas working at a frequency of 27 GHz to 35 GHz are compared to describe that Embodiment 1 has a low dispersion characteristic, where beam coding in FIG. 13, FIG. 14(a), and FIG. 14(b) is based on the foregoing Table 1. It can be learned that when the frequency changes from 27 GHz to 35 GHz, the angle of the related art changes to 44°, and the angle of Embodiment 1 changes to 35°, so that Embodiment 1 of this application has a smaller angle offset.

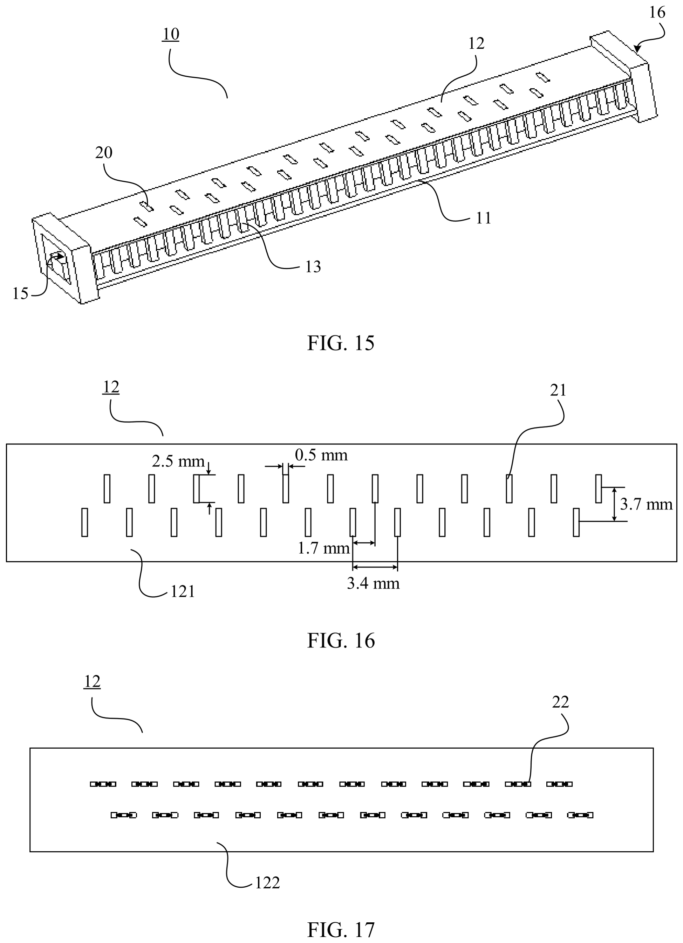

FIG. 15 is a diagram of a structure of a leaky-wave antenna according to Embodiment 2 of this application; FIG. 16 is a top view of a cover plate 12 of the leaky-wave antenna according to Embodiment 2 of this application. FIG. 17 is a bottom view of the cover plate 12 of the leaky-wave antenna according to Embodiment 2 of this application.

Compared with the foregoing Embodiment 1, the radiation slot 21 in Embodiment 2 shown in FIG. 15 to FIG. 17 may be a rectangular slot. A long side of the rectangular slot is perpendicular to the transmission direction of the electromagnetic waves (that is, the extension direction of the strip-shaped ridge 14). That is, an angle formed between the long side of the rectangular slot and the transmission direction of the electromagnetic waves is 90 degrees. In this case, the radiation slot 21 may also be referred to as a transverse slot.

As shown in FIG. 15 to FIG. 17, the radiation slot 21 of the radiating element 20 may be a transverse slot, and the radiating element 20 may be implemented by etching transverse slots on a printed circuit board and loading PIN diodes (the PIN diodes are located inside the structure). The printed circuit board is formed by a single-layer core board, where a slot array is etched on an upper copper foil, and a solder pad (that is, a metal patch) is etched on a lower copper foil. A base unit of the etched slot array is a transverse slot, where a length of the slot is 2.5 mm (which is a size in the y direction), and a width of the slot is 0.5 mm (which is a size in the x direction). There are 24 units in the array, which are arranged in two rows. A spacing between units in each row of the slots is 3.4 mm, and a line spacing between the two rows is 3.7 mm. There is a 1.7 mm interlace between the two rows of slots in the x direction. FIG. 17 is a structure of an electric control switch 22, where 24 sets of electric control switches 22 are in one-to-one correspondence with 24 radiation slots 21. The electric control switch 22 includes metal patches and PIN diodes. For specific structure details, refer to the related descriptions in FIG. 11. Radiation power of a longitudinal slot may be controlled by electrically controlling on and off of the PIN diodes.

**Table 2: Antenna digital coding schemes for implementing an angle of -40° at a frequency of 30 GHz in the related art and in Embodiment 2**

| Angle (30 GHz) | Structure | Digital coding scheme |
|---|---|---|
| -40° | Related art (FIG. 1) | 00010001001100110011001000100010001001100110011001000100 |
| | Embodiment 2 (FIG. 15) | 00010001001100110011001000100010001000100110011001100110 |

The first row in Table 2 shows the antenna digital coding scheme for implementing the angle of -40° at the frequency of 30 GHz by using the antenna structure (in which the radiation slot 21 is a transverse slot) provided in the related art shown in FIG. 1. The second row in Table 2 shows the antenna digital coding scheme for implementing the angle of -40° at the frequency of 30 GHz by using the antenna structure provided in Embodiment 2 of this application. In Table 2, each bit corresponds to one radiating element 20, a digit "0" indicates that the corresponding radiating element 20 does not work, and a digit "1" indicates that the corresponding radiating element 20 works. At an angle other than -40°, the antenna may have a digital coding scheme different from the digital coding scheme shown in Table 2.

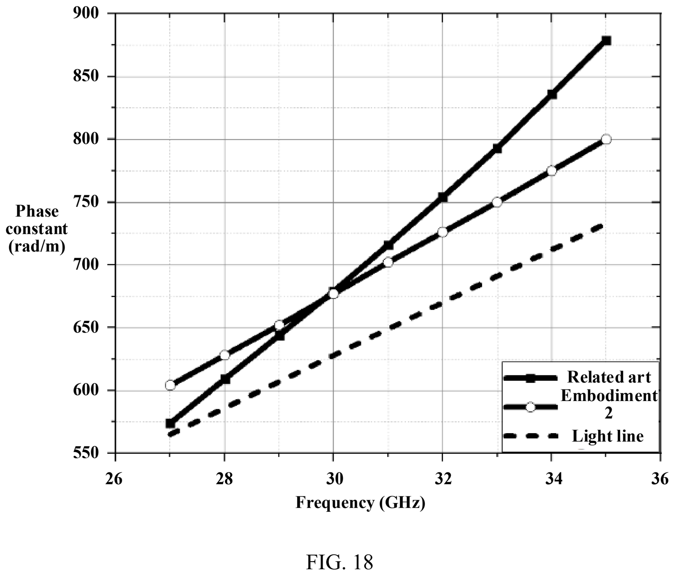

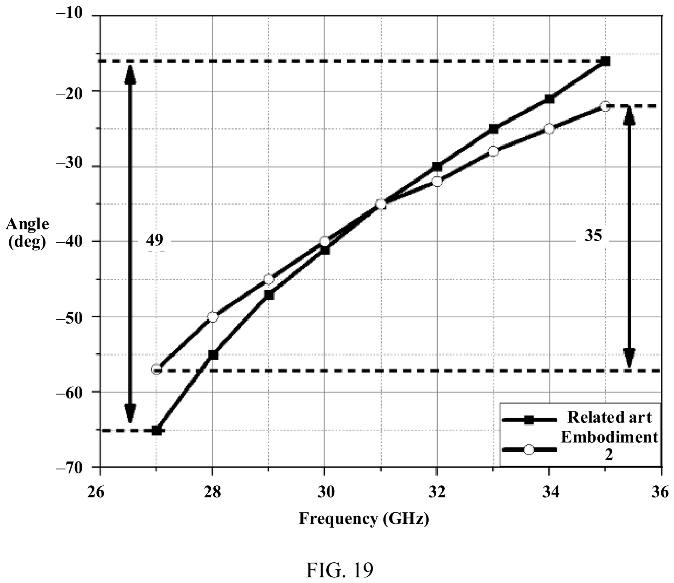

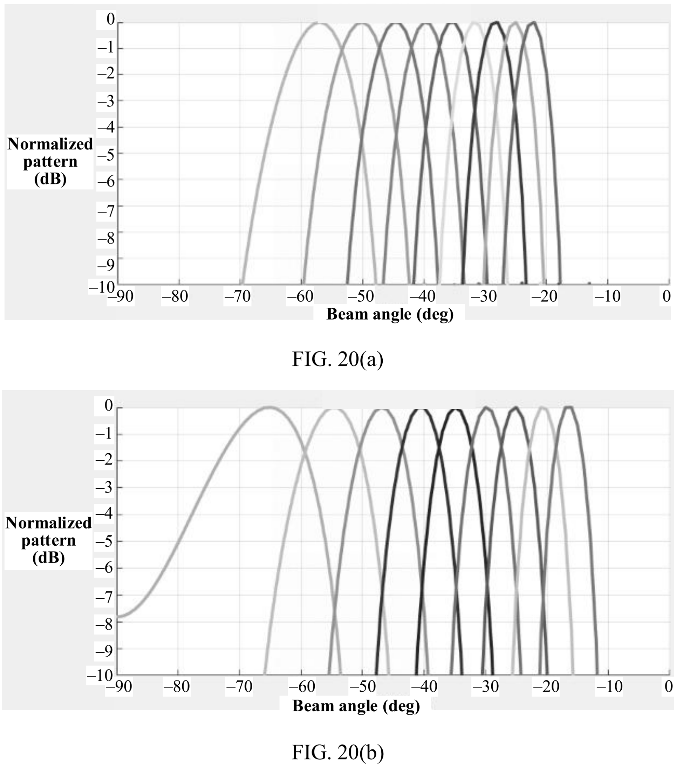

FIG. 18 is a comparison diagram of phase constant curves of Embodiment 2 and the related art. FIG. 19 is a comparison diagram of antenna beam sweeping angles of Embodiment 2 and the related art. FIG. 20(a) and FIG. 20(b) are normalized radiation patterns of Embodiment 2 and the related art, where FIG. 20(a) is a normalized radiation pattern of the related art, and FIG. 20(b) is a normalized radiation pattern of Embodiment 2.

In FIG. 18, a phase constant of the antenna structure provided in the related art and a phase constant of the antenna structure provided in Embodiment 2 of this application when the radiation slot 21 is a transverse slot at 27 GHz to 35 GHz are compared. It can be learned that a slope of the phase constant curve of Embodiment 2 is smaller, and a value and the slope are closer to those of a light line (light line), so that the dispersion is smaller. In FIG. 19, FIG. 20(a), and FIG. 20(b), frequency sweeping characteristics of antennas working at a frequency of 27 GHz to 35 GHz are compared to describe that Embodiment 2 has a low dispersion characteristic, where beam coding in FIG. 19, FIG. 20(a), and FIG. 20(b) is based on the foregoing Table 2. It can be learned that when the frequency changes from 27 GHz to 35 GHz, the angle of the related art changes to 49°, and the angle of Embodiment 2 changes to 35°, so that Embodiment 2 of this application has a smaller angle offset.

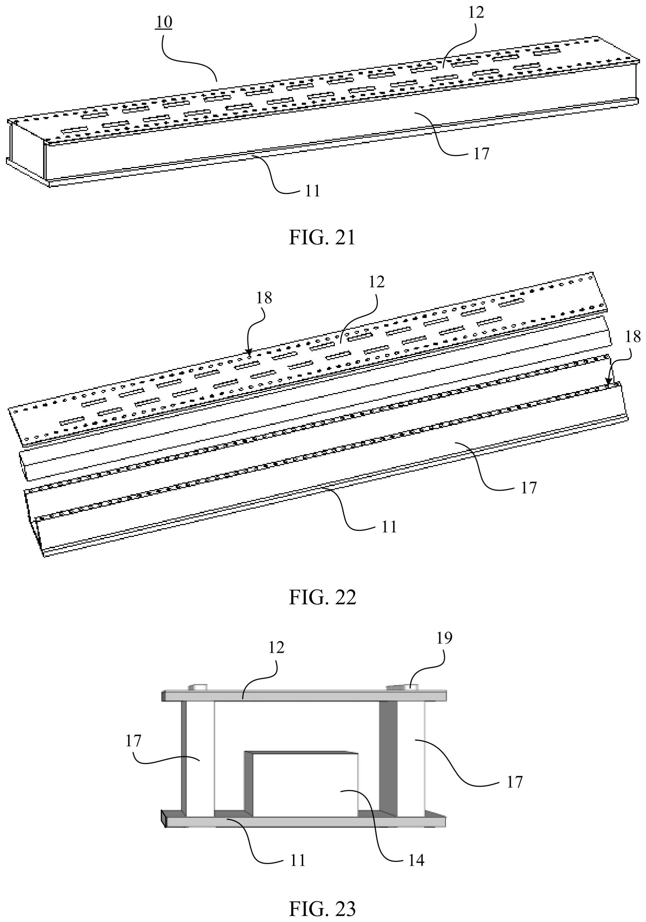

FIG. 21 is a diagram of a structure of a leaky-wave antenna according to Embodiment 3 of this application; FIG. 22 is an exploded view of the structure of the leaky-wave antenna according to Embodiment 3 of this application; FIG. 23 is a side view of the leaky-wave antenna according to Embodiment 3 of this application.

Compared with the foregoing Embodiment 1 and Embodiment 2, in Embodiment 3 shown in FIG. 21 to FIG. 23, the metal pin array 13 (that is, the bandgap pins) of the gap waveguide 10 is replaced with a metal baffle plate 17, so that processing may be simplified while a shielding effect is achieved.

Specifically, the gap waveguide 10 further includes metal baffle plates 17 arranged on two sides of the strip-shaped ridge 14. The two metal baffle plates 17 are parallel to each other and are arranged at an interval, and connect the metal bottom plate 11 and the cover plate 12 on the two sides, so as to jointly define an inner cavity of the gap waveguide 10. For example, the metal baffle plate 17 may be a baffle plate made of any metal material, for example, an aluminum baffle plate or a copper baffle plate.

One end of the metal baffle plate 17 is connected to the metal bottom plate 11, and the other end is connected to the cover plate 12. For example, the cover plate 12 is a PCB, and the metal baffle plate 17 and the cover plate 12 may be fastened through a metal screw 19. For example, screw holes are provided on both the metal baffle plate 17 and the cover plate 12, so that the metal baffle plate and the cover plate are fixed together through the metal screw 19, and the metal screw 19 has a bandgap function, to prevent energy (electromagnetic waves) leakage through dense arrangement.

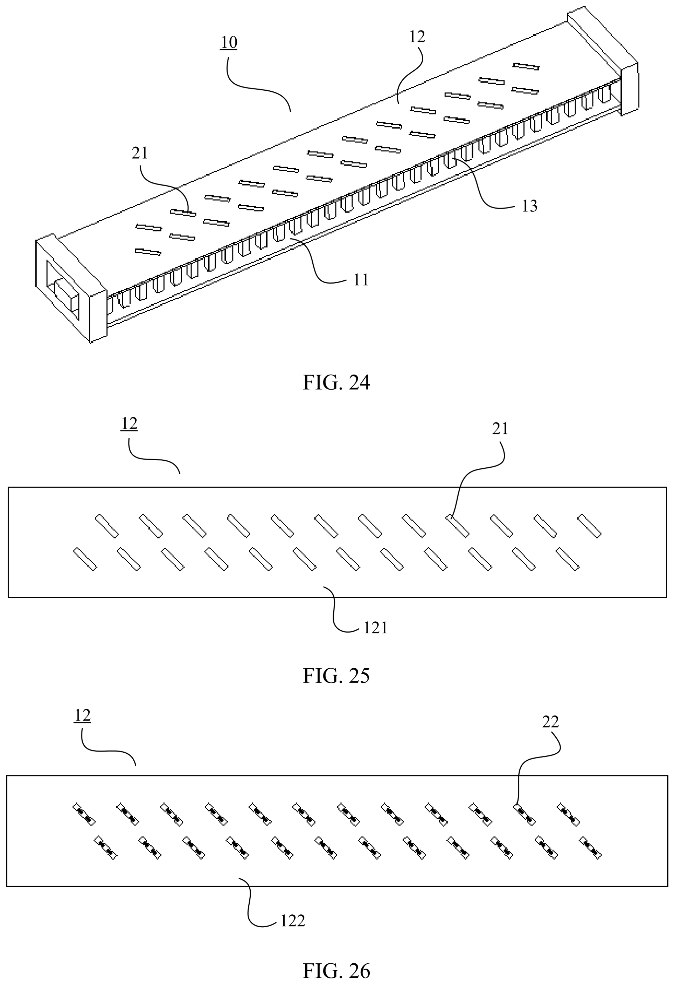

FIG. 24 is a diagram of a structure of a leaky-wave antenna according to Embodiment 4 of this application; FIG. 25 is a top view of a cover plate of the leaky-wave antenna according to Embodiment 4 of this application. FIG. 26 is a bottom view of the cover plate of the leaky-wave antenna according to Embodiment 4 of this application.

Compared with the foregoing Embodiment 1, Embodiment 2, and Embodiment 3, in Embodiment 4 shown in FIG. 24 to FIG. 26, the radiation slot 21 may be a rectangular slot, and an angle formed between a long side of the rectangular slot and the transmission direction of the electromagnetic waves is 45 degrees. That is, the radiating element 20 may alternatively be 45-degree polarized, thereby having polarization diversity.

In another aspect, an embodiment of this application further provides a communication device, including the electrically controlled beam sweeping leaky-wave antenna provided in any one of the foregoing embodiments.

Optionally, the communication device may be any communication device that uses an antenna structure to transmit energy or electromagnetic waves, for example, a base station, a radar, or a mobile terminal (for example, a mobile phone), but is not limited thereto.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electrically controlled beam sweeping leaky-wave antenna, comprising:
a gap waveguide (10), comprising a strip-shaped ridge (14), wherein the gap waveguide (10) is configured to transmit electromagnetic waves in a form of traveling waves, and the strip-shaped ridge (14) is arranged extending in the gap waveguide (10) along a transmission direction of the electromagnetic waves; and
a plurality of radiating elements (20), arranged on a side wall of the gap waveguide (10), wherein each radiating element (20) comprises a radiation slot (21) and an electric control switch (22), the radiation slot (21) is configured to leak the electromagnetic waves in the gap waveguide (10) to free space to form a beam, and the electric control switch (22) is configured to control a working status of the radiation slot (21) to implement beam sweeping.

2. The electrically controlled beam sweeping leaky-wave antenna according to claim 1, wherein the gap waveguide (10) further comprises a metal bottom plate (11) and a cover plate (12) that are arranged opposite to each other and at an interval, the strip-shaped ridge (14) is arranged protruding from a surface of the metal bottom plate (11) facing the cover plate (12), a gap exists between the strip-shaped ridge (14) and the cover plate (12), and the plurality of radiating elements (20) are arranged on the cover plate (12).

3. The electrically controlled beam sweeping leaky-wave antenna according to claim 2, wherein the gap waveguide (10) further comprises a metal pin array (13), the metal pin array (13) comprises a plurality of pins, and the plurality of pins are periodically arranged on two sides of the strip-shaped ridge (14).

4. The electrically controlled beam sweeping leaky-wave antenna according to claim 2, wherein the gap waveguide (10) further comprises metal baffle plates (17) that are arranged on two sides of the strip-shaped ridge (14).

5. The electrically controlled beam sweeping leaky-wave antenna according to claim 4, wherein the metal baffle plates (17) are fastened to the cover plate (12) through a metal screw (19).

6. The electrically controlled beam sweeping leaky-wave antenna according to any one of claims 2 to 5, wherein the cover plate (12) comprises a dielectric substrate (123) and a first metal layer (121) arranged on an outer surface of the dielectric substrate (123), the radiation slot (21) is formed on the first metal layer (121), and the electric control switch (22) is arranged on an inner surface of the dielectric substrate (123).

7. The electrically controlled beam sweeping leaky-wave antenna according to any one of claims 1 to 6, wherein the electric control switch (22) comprises at least one of a PIN diode, a variable capacitance diode, a micro-electro-mechanical system switch, and a photosensitive switch.

8. The electrically controlled beam sweeping leaky-wave antenna according to any one of claims 1 to 7, wherein the radiation slot (21) is a rectangular slot, and an angle formed between a long side of the rectangular slot and the transmission direction of the electromagnetic waves is 0 degrees, 45 degrees, or 90 degrees.

9. The electrically controlled beam sweeping leaky-wave antenna according to any one of claims 1 to 8, wherein the plurality of radiating elements (20) are arranged in a plurality of rows, and the rows of the radiating elements (20) are staggered from each other.

10. The electrically controlled beam sweeping leaky-wave antenna according to any one of claims 1 to 9, wherein the electrically controlled beam sweeping leaky-wave antenna further comprises:
a feeding structure (30), connected to the gap waveguide (10) and configured to feed the electromagnetic waves into the gap waveguide (10).

11. The electrically controlled beam sweeping leaky-wave antenna according to any one of claims 1 to 10, wherein the electrically controlled beam sweeping leaky-wave antenna further comprises:
a matched load (40), connected to the gap waveguide (10) and configured to absorb remaining electromagnetic waves.

12. The electrically controlled beam sweeping leaky-wave antenna according to any one of claims 1 to 11, wherein the electrically controlled beam sweeping leaky-wave antenna further comprises:
a beam control module (50), configured to output a control signal to the electric control switch (22) to implement the beam sweeping.

13. A communication device, comprising the electrically controlled beam sweeping leaky-wave antenna according to any one of claims 1 to 12.
